# EUROPEAN PATENT SPECIFICATION

(11) **EP 2 616 252 B1**
(45) Date of publication and mention of the grant of the patent: **06.01.2016**
(21) Application number: 11785283.0
(22) Date of filing: 13.09.2011
(51) Int. Cl.: B60B 15/00, B60B 15/02, B60B 15/06

(54) **TRAVELLING VEHICLE WHEEL**
RAD FÜR EIN GELÄNDEFAHRZEUG
ROUE MOTRICE DE VÉHICULE

(30) Priority: 14.09.2010 CZ 20100685
(43) Date of publication of application: 24.07.2013
(73) Proprietor: Technicka Univerzita v Liberci, 461 17 Liberec (CZ)
(72) Inventor: ZADA, Vaclav, 463 12 Liberec (CZ); BRABEC, Pavel, 463 43 Cesky Dub (CZ); VOZENÍLEK, Robert, 460 15 Liberec (CZ)
(74) Representative: Musil, Dobroslav
(86) International application number: PCT/CZ2011/000090
(87) International publication number: WO 2012/034545

(56) References cited:
- WO-A2-2005/002996
- US-A- 527 991
- US-A- 3 418 960
- US-A- 3 591 241

## Description

### Technical field

A travelling vehicle wheel for driving on a road and/or in a terrain, whose rolling surface is formed of circumferential segments following one after another, whereas the circumferential segments in the body of travelling wheel are arranged displaceably between the position for riding on a road and the terrain position, in which the individual circumferential segments are turned into the askew positions with respect to the circumference of the travelling wheel, whereas between the circumferential segments in direction of circumference of the travelling wheel there are gaps interrupting the rolling surface of the travelling wheel, whereas each circumferential segment is hinge-connected with body of travelling wheel by means of the change-over mechanism arranged in the body of travelling wheel, whereas the input member of hinged connection is coupled with a change-over drive of the circumferential segment, and the output member of hinged connection is formed of a swivel pin being firmly connected with the circumferential segment.

### Background art

Known are motor vehicles designed for driving on a road, for which overcoming even not complicated terrain outside the road is problematic and there is always danger that they get stuck in the terrain and the vehicle may be damaged. Vehicles of the "allroad" type remedy this shortcoming, nevertheless their usage off the road is limited to a certain degree of a heavy terrain. Heavy terrain is not given only by terrain unevenness, but also by a surface of the terrain which requires means of the wheel increasing its traction abilities like in a mud, on the snow, etc.

US3418960A describes an amphibian vehicle according to the preamble of claim 1 at which, before it is put on water surface, its conventional road wheels on the driving axis are replaced with wide cylindrical hubs fitted with radial spiral-shaped vanes. Those vanes are fixed, or rotatably adjustable around radial pins, or deformable into a desired shape in a different manner. The shape of the vanes is to enable the driving of a vehicle when floating on water surface and facilitate transition of a vehicle in very difficult terrain adjacent to water surface. The solution can be utilized solely for the above purpose and is not intended for wheeled vehicles, the purpose corresponding with the construction of the supporting hub, the shape of the vanes and the manner in which they are turned.

Solution according to WO2005002996A2 in principle protects the cylinder, which is known from the field of worm conveyers. On the cylinder there is a plurality of radial plate protrusions arranged in a spiral. The device can be used as a worm conveyer, or as the driving of a means of transport on a minimum load-bearing capacity underlay, when the blades get bogged down and the bearing surface is formed by a wall of the cylinder. A modification formed by these two parallel cylinders is outlined. This modification could be used as a specific driving device for setting a vessel into motion in water or a vehicle on a semiliquid surface, including movement along the longitudinal axis of the cylinders. The solution is not suitable for emergency driving on a metalled road either.

US527991A relates to the driving of a vessel whose driving means is a paddle wheel which is by a greater part of its circumference sunk under water. The blades have two positions. When the paddle wheel rotates, they are adjusted by a stable mechanism from a position in which at an engagement they lean against water into a position in which they are acted upon by minimum water resistance with respect to the direction of movement as the paddle wheel rotates further.

Solution according to DE10046421 A1 utilises a flat disc arranged on a face of travelling wheel provided with a common tyre, whose outside diameter is smaller than the tyre rolling diameter. In radial holes on circumference of this disc there are mounted extendable spikes, which after intervention of a vehicle's driver protrude above the tyre rolling diameter thus enabling e.g. riding in the snow or on an icy underlay. In principle this solution serves only to get the vehicle off a certain heavy area of the terrain.

Solution according to DE19912553B4 or similarly DE19950946A1, describe a device at which in case of a need there are transferred to surface of tyre tread the engagement means creating on the tread the ribs being parallel with rotation axis of travelling wheel. These relatively complicated devices are installed on faces of travelling wheels. They are effective e.g. on a snowy riding surface, their function corresponds to snow chains, while the driver puts them into their working position on the wheel using a control means during vehicle riding.

Travelling wheel according to EP930980B1 is solved as a dual wheel, when in a gap between two discs with common tyres a further narrower disc is arranged, on which there is a special traction tyre whose tread is equipped with engagement protrusions, e.g. spikes. At a low air pressure in traction tyre the engagement protrusions are under the level of the treads of neighbouring common tyres. In case of a need, the traction tyre in a usual manner inflates itself to a pressure at which the engagement protrusions extend above the level of treads of neighbouring common tyres, by which adhesion is increased e.g. on a snowy surface.

US6273517B1 proposes to attach into an inner circumference of the disc of travelling wheel with a classic tyre in direction from its outer face a ring, in which are arranged radial vanes protruding in direction from the face of the wheel, while in a radial direction they do not exceed surface of the tyre tread. They are made of elastic tough material, which upon contact with a great solid obstacle deform for a short term without damage. The device increases driveability of vehicle in snow, mud and sand.

Solutions according to the background enable in some cases to drive a vehicle or vessel on water surface, but they are in actual fact unsuitable for driving in terrain and especially on a metalled road. Other solutions improve the traction conditions during driving on a surface with a low adhesion nevertheless they are not suitable for driving in a terrain whose sandy, muddy and/or snowy surface is moreover extremely uneven. The goal of the invention is to propose a travelling wheel, which would be suitable for riding of vehicle on a common road, at the same time it would facilitate movement on a slippery road covered with snow slush or mud and would enable motion in a heavy uneven, loose or stony terrain.

### Principle of the invention

The goal of the invention has been achieved by a travelling vehicle wheel for driving on a road and/or in a terrain circumferential segments are in the body of the travelling wheel arranged displaceably between the position for driving on a road and the terrain position, in which the individual circumferential segments are turned into the askew positions with respect to the circumference of the travelling wheel, whose principle consist in that, the between the input and output member of hinged connection there may be arranged a swinging body, whose one end is in a fixed manner connected with the input member of hinged connection, while its second end is provided with rotation drive of a swivel pin being in a fixed manner connected with the circumferential segment. But by turning the circumferential segments a considerably greater wheel gauge may be achieved.

Each circumferential segment is coupled with an independent change-over drive. This facilitates turning of the segments, as the segments turn subsequently only at a time, when they are not in contact with the terrain.

This cannot be achieved in a case, when all circumferential segments are coupled with a common change-over drive. This solution requires a higher output of the change-over mechanism, but the displacement time is shortened and an equal setting of circumferential segments may be achieved easier, if this is desired.

The output of the common change-over drive is formed of a rotating cam of the transmission means arranged in axis of rotation of the travelling wheel, while its functional shaped surface or surfaces are coupled with swivel pins of all circumferential segments. Change-over of circumferential segments in this case is performed by a respective turning of the rotating cam.

It is also advantageous, when the output of the common change-over drive is formed of a shifting cam of the transmission means arranged in axis of rotation of the travelling wheel, while its functional shaped surface or surfaces are coupled with swivel pins of all circumferential segments. In this case change-over of circumferential segments is performed by a respective axial displacement of the shifting cam.

The change-over drive comprises a hydraulic motor, at which there is no need to be supplemented by a further transmission.

If the change-over drive comprises an electric motor, preferably this is supplemented by a harmonic gearbox or a worm-gear unit.

It is advantageous if the change-over drive comprises an encoder for scanning the position of change-over of the circumferential segment, which facilitates an exact change-over of circumferential segments.

### Description of the drawing

The drawing represents exemplary embodiments of the device according to the invention, where Fig. 1 represents a travelling wheel with circumferential segment displaceable around its symmetry axis, Fig. 2a and 2b a travelling wheel with circumferential segment independently displaceable around an axis being skew with respect to the rotation axis of travelling wheel, Fig. 3 a travelling wheel with circumferential segment displaceable around axis being skew with respect to rotation axis of travelling wheel, while the change-over mechanisms of all segments have a common driving means, the Fig. 4 a rotating cam of common driving means, Fig. 5 a shifting cam of common driving means, and Fig. 6 a travelling wheel with circumferential segment with two degrees of freedom.

### Examples of embodiment

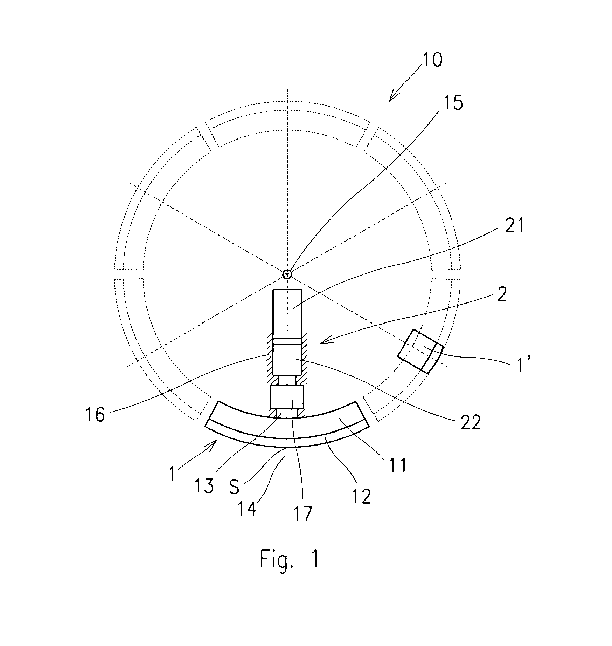

Travelling wheel **10** according to the invention in exemplary embodiment represented in Fig. 1 comprises six identical circumferential segments **1**, which in the basic configuration practically create a continuous wheel tread **10**. Each segment **1** has a carrying section **11** in principle creating a rim section of the disc of travelling wheel **10** and on it arranged a tyre section **12**, which may be solved as a tyre itself, possibly it may be produced of elastic filled material, for example rubber. In other embodiments the number of segments **1** may be different, of course.

The carrying section **11** of circumferential segment **1** is in a fixed manner connected with the swivel pin **13**, whose axis **14** in this exemplary embodiment creates a symmetry axis of circumferential segment **1**, through whose centre **S** it is passing. At the same time the axis **14** lies in a plane perpendicular to rotation axis **15** of travelling wheel **10** and it intersects this axis **15.** The pin **13** is mounted rotatably in the body **16** of travelling wheel **10**, while it is connected with rotation output of change-over mechanism **2**.

Each circumferential segment **1** has an independent change-over mechanism **2** arranged in a body **16** of travelling wheel **10**. The change-over mechanism **2** is coupled with change-over drive, which is formed of a driving motor **21**, e.g. a direct-current electric motor with encoder scanning an angle position of its output shaft. With the driving motor **21** there is coupled a harmonic gearbox **22**, whose output shaft is connected with the swivel pin **13**. A springy torsional damper **17** is a part of the swivel pin **13**. The supply of electric energy to the driving motor **21** and the not represented control and information transmission links are in a not represented manner run through the carrying shaft of travelling wheel **10**.

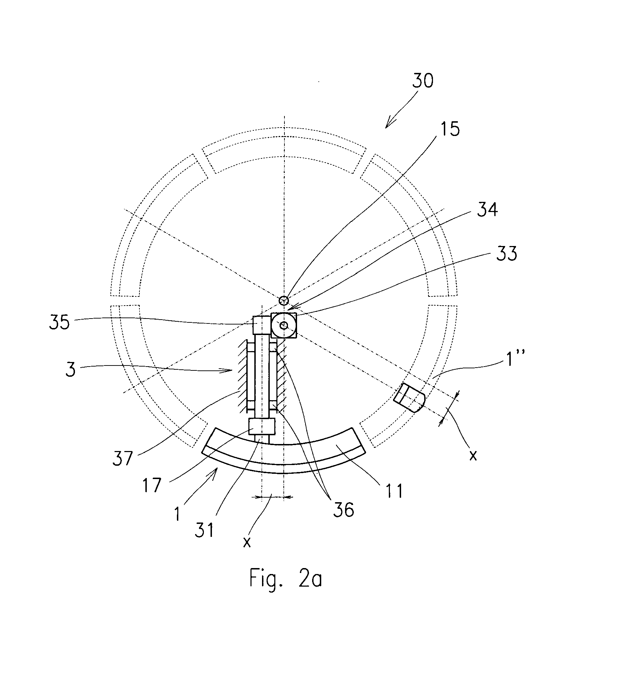

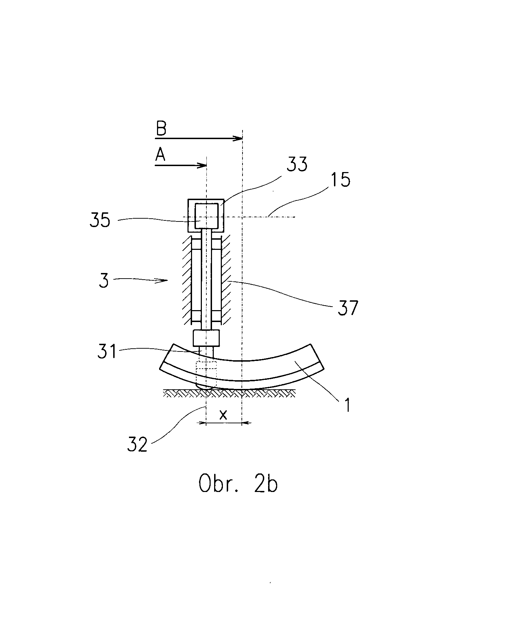

In another exemplary embodiment the device according to the embodiment represented in Fig. 2a and 2b each circumferential segment **1** of travelling wheel **30** also has an independent change-over mechanism **3**. The Fig. 2a shows a side view to the travelling wheel with circumferential position of segment **1,** Fig. 2b shows a view in driving direction to segment **1** turned with respect to the situation in Fig. 2a by 90°.

The carrying section **11** of circumferential segment **1** is in a fixed manner connected with the swivel pin **31** in a place between the centre of circumferential segment **1** and one of its ends. Preferably, the swivel pin **31** is connected with the carrying section **11** of circumferential segment **1** approximately in a quarter of length of the carrying segment **1**. The axis **32** of the swivel pin **31** lies in a plane being perpendicular to rotation axis **15** of travelling wheel **30** and it is a skew line with respect to rotation axis **15** of travelling wheel **30**.

The change-over drive of the change-over mechanism **3** is created by the driving motor **33**, which for example like at the embodiment according to Fig. 1 is a direct current electric motor with encoder scanning the angle position of its output shaft. In another preferred exemplary embodiment the driving motor **33** may be a lamellar hydraulic motor with swinging motion.

The output shaft of driving motor **33** is parallel with rotation axis **15** of travelling wheel **30**. To the output shaft of the driving motor **33** there is connected the worm gear unit **34**, whose worm wheel **35** is connected with the swivel pin **31** mounted rotatably by means of bearings **36** in the body **37** of travelling wheel **30**. The swivel pin **31** comprises a torsional damper **17**.

The supply of electric energy to the driving motor **33** and the not represented control and information transmission links are in a not represented manner run through the carrying shaft of travelling wheel **30**.

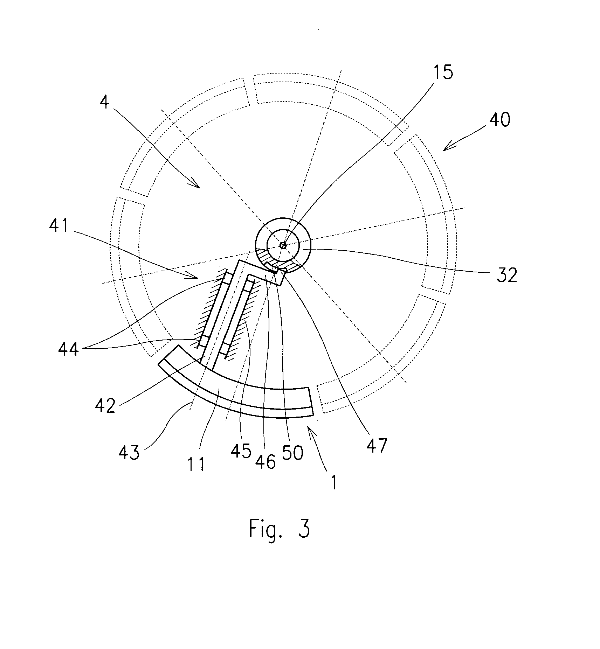

In exemplary embodiment of the device according to the invention represented in Fig. 3 each circumferential segment **1** of travelling wheel **40** has a change-over mechanism **4**, which comprises for each circumferential segment **1** an independent change-over mechanism **41**. The carrying section **11** of circumferential segment **1** is in a fixed manner connected with swivel pin **42** in a place laying between centre of circumferential segment **1** and one of its ends. Preferably the swivel pin **42** is connected with a carrying section **11** of circumferential segment **1** approximately in a quarter of length of the carrying segment **1**. The rotation axis **43** of the swivel pin **42** lies in a plane perpendicular to rotation axis **15** of travelling wheel **40** and it is a skew line with respect to rotation axis **15** of travelling wheel **40**. The pin **42** is mounted rotatably by means of bearings **44** in the body **45** of travelling wheel **40**. The end of swivel pin **42** opposite from the circumferential segment **1** is finished with a crank **46** with a finger **47**.

The change-over mechanism **4** is coupled with the common gearing means **5** for control of all circumferential segments **1**.

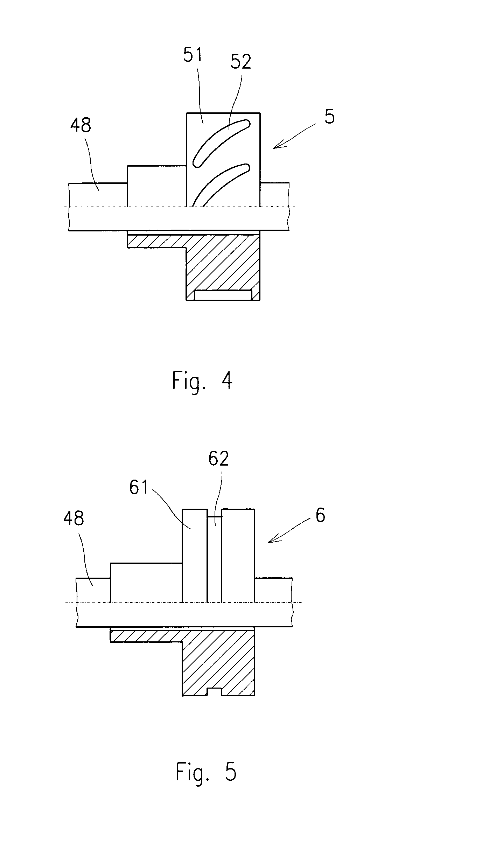

According to embodiment represented in Fig. 4 this gearing means **5** comprises the actuating cam **51** mounted rotatably with respect to the carrying shaft **48** as well as to the body **45** of travelling wheel **40**. In cylindric surface of the cam **51** there are performed six screw-shaped grooves **52**, which form a guidance for fingers **47** of the cranks **46** of swivel pins **42**.

In exemplary embodiment according to Fig. 5 the output of gearing means **6** of the change-over mechanism **4** from Fig. 3 is coupled with the shifting cam **61.** The shifting cam **61** is displaceably mounted with respect to the supporting axle **48** of the travelling wheel **40** as well as to the body **45** of the travelling wheel **40.** In cylindrical surface of the shifting cam **61** there is performed a circumferential groove **62,** which creates guidance for fingers **47** of the cranks **46** of swivel pins **42.**

The change-over drive is here formed of the not represented driving motor, for example electric motor, whose output is a rotating reversible motion for drive of the actuating cam **51** from Fig. 4, or sliding reversible motion for drive of the shifting cam **61** from Fig. 5.

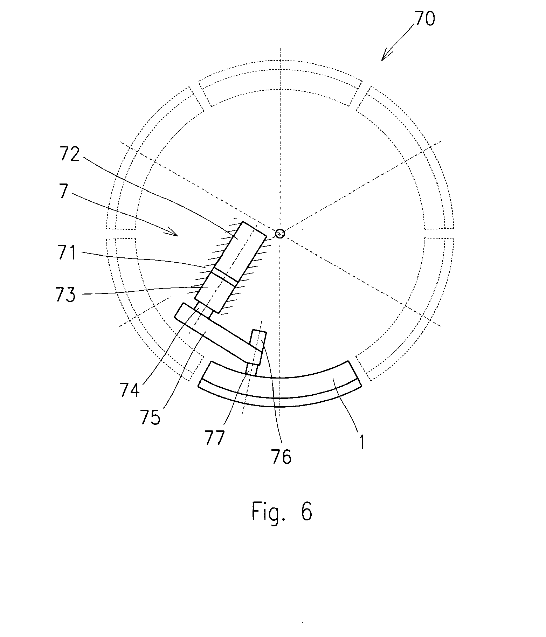

Similarly, like in the embodiment of travelling wheel **10** from Fig. 1, in embodiment represented in Fig. 6, each circumferential segment **1** is provided with independent change-over mechanism **7** arranged in the body **71** of travelling wheel **70**. In this embodiment the change-over drive of the change-over mechanism **7** is formed of two driving motors.

The first driving motor **72**, which for example is a direct-current electric motor with encoder scanning the angle position of its output shaft, is coupled with the harmonic gearbox **73**, whose output shaft is connected by means of the not represented torsional damper with the swivel pin **74** connected with output of the first driving motor **72.**

The swivel pin **74** is in a fixed manner connected with one end of the swinging body **75**. Second end of the swinging body **75** is provided with a second driving motor **76**, which serves as a rotation drive of the swivel pin **77** of circumferential segment **1**. The circumferential segment **1** is eccentrically attached to the swivel pin **77**. The output shaft of motor **76** is arranged e.g. coaxially with swivel pin **77**, in a not represented embodiment the motor **76** is mounted along a swinging body **75**, and between its output shaft and the swivel pin **77** a bevel gearing is arranged.

The travelling wheels **10**, **30**, **40**, **70** according to the invention are preferably driven by independent not represented travelling driving motors. This facilitates control of the change-over mechanisms **2**, **3**, **4**, **7**, as it is mentioned in the following text. Nevertheless it is obvious, that each vehicle axle may have one travelling driving motor for both travelling wheels, possibly the vehicle may have one common travelling driving motor.

For driving on a normal roadway the circumferential segments **1** are set in circumferential direction of travelling wheel **10**, **30**, **40**, **70**, they continue one after another thus creating a continuous rolling surface of the travelling wheel, and the wheels roll on the underlay in a classic manner. Configuration of travelling wheels **10, 30, 40, 70** in the set position is always secured by means of the change-over mechanism itself, for example by means of self-locking effect of the worm-gear unit, by means of blocked hydraulic motor, possibly otherwise.

The following text describes the control function of the travelling wheel **10** on an exemplary embodiment represented in Fig. 1, possibly in Fig. 2.

Before entering a slippery, sandy, stony or similarly heavy terrain, configuration of all driving travelling wheels **10, 30, 40, 70** is usually changed-over. At embodiment with independent driving motors **21, 33, 72** of individual circumferential segment **1,** the change-over mechanisms **2, 3, 7** of those circumferential segments **1,** which are outside a contact with an underlay, are subsequently engaging. This is preferred both from the point of view of dimensions of driving motors **21, 33, 72,** which may be small taking into account the desired performance, and from the point of view of dimensioning the parts of the change-over mechanisms **2, 3, 7.** Circumferential segment **1** or segments, which are actually in contact with underlay, are first released by driving forward the vehicle, and only after then the change-over is performed. Circumferential segments **1** of all travelling wheels **10, 30, 70** are thus changed-over into a position, in which they are set askew to circumferential direction of travelling wheel **10, 30.** For driving on a slippery terrain, e.g. on a snow slush, from the point of view of adhesion requirements a turning of circumferential segments **1** of the vehicle by 20° to 30° with respect to direction of the ride may be suitable. For driving in an uneven stony terrain a greater angular displacement of circumferential segments **1** being close nearly to 90°, practically into the position **1'**, is more suitable. Of course, this mode features a rocking riding resembling walking.

At embodiment according to Fig. 1, where the circumferential segment **1** upon change-over turns around its axis passing the centre **S**, thus around axis **14** of the swivel pin **13**, the "gauge" of travelling wheels **10** does not change, because the distance of centre contact points of tread of the circumferential segment **1** with the road does not change.

At travelling wheels **30** in embodiment according to Fig. 2a, 2b due to skew running of axis **32** of swivel pin **31** and rotation axis **15** of travelling wheel **30** and due to non-symmetric connection of the carrying section **11** of circumferential segment **1** with swivel pin **31** after turning the circumferential segments **1** by 90° into position **1"**, the gauge of travelling wheels **30** is changed. Increasing of initial gauge **A** of travelling wheels **30** to an increased gauge **B** (in this case given by a value 2·**x**) facilitates improvement of side stability of the vehicle (Fig. 2b). In case of even number of circumferential segments **1** it is also possible to change a value or sense of turning one after another following circumferential segments **1**. Then the contact points of one half of the number of segments **1** represent "wheel gauge" increased by the value 2.**x** at maximum, of the second half of segments **1** "wheel gauge" decreased by the value 2.**x** at maximum, which may be suitable on an uneven and inhomogenous underlay.

At travelling wheels **40** in embodiment according to Fig. 3 to 5, due to the common drive of the change-over mechanism **4** by means of the gearing means **5**, **6** all circumferential segments **1** displace simultaneously. Nevertheless this is less advantageous from the point of view of loading the parts of mechanism of that segment **1**, which at the moment is in contact with the underlay. At the same time, by turning the actuating cam **51** or by axial displacement the shifting cam **61**, the finger **47** displaces by action of the groove **52** in circumferential direction, or of the groove **62** in axial direction so that it turns the crank **45** by which it deflects the circumferential segment **1** from circumferential direction of the travelling "wheel". In arrangement represented in the Fig. 3 by change-over of the circumferential segments **1** like at the embodiment according to Fig. 2, the wheel gauge is changed.

The embodiment according to Fig. 6 features a greater variability in setting of positions for circumferential segments **1**. By means of the driving motor **72** sideways from longitudinal vehicle axis the swinging bodies **75** may be tilted, through which a gauge of travelling wheels may be changed by a considerably greater value when compared with embodiment according to Fig. 2a, 2b. By means of the drive **76** of swivel pin **77** the direction of circumferential segments **1** may be then adjusted with respect to circumferential direction of travelling wheels **70**. At a slow movement of the vehicle by an independent control of individual circumferential segments it is possible to search for the most suitable places for "a touch down" and to set them before touching the underlay into an optimal direction with respect to terrain surface. For such an application the vehicle may be e.g. equipped with a laser or ultrasound device scanning unevenness of the terrain. It is obvious, that the mechanism of circumferential segments **1** with two degrees of freedom will be less robust and during motion of vehicle will require greater care.

In another, not represented embodiments for example the rotation axis **14** of circumferential segment **1** need not lies in a plane being perpendicular to rotation axis **15** of the travelling wheel **10**, **30**, **40**, **70**. In such a case there occurs a change in gauge of the travelling wheels **10, 30, 40, 70** also if the axis **14** of swivel pin **13** creates an axis of symmetry of the circumferential segment **1** and passes through its geometrical centre **S** and also through rotation axis **15** of the travelling wheel **10.** Then, of course, the plane of travelling wheel **10** in a changed-over (terrain) position at a time of contact with underlay has another inclination towards the underlay, by which the engagement conditions of the travelling wheel **10**, **30**, **40**, **70** may be affected to a certain degree.

Circumferential gaps between the changed-over circumferential segments are given by angular displacement and pitch distances of circumferential segments **1**. At a small number of segments, e.g. at six segments of here described exemplary embodiments, the gaps are considerable and the wheel practically becomes to be a hexagon. The manner of motion of such a wheel is best expressed with the designation "wheel crawler". Vertical alternating motion of vehicle chassis is acceptable from the point of view of driving comfort with respect to roughness of an underlay, on which the vehicle moves (and which would generate the rocking motion anyway) and a low speed of the vehicle. It is important that the circumferential segments turned by 90° create a wide and deep engagement track, which was not available at vehicles according to the background art. The small angular displacement of circumferential segments **1**, at which the circumferential gaps between them are small, can be advantageously utilised when driving on a slippery road. A short-term interruption of contact of the rolling surface of travelling wheels with a slippery road may exert an effect which is close to an effect e.g. of ABS or ASR.

### List of referential markings

- 1: circumferential segment
- 1': circumferential segment in displaced position
- 1": circumferential segment in displaced position
- 10: travelling wheel
- 11: carrying section (of circumferential segment)
- 12: tyre section (of circumferential segment)
- 13: swivel pin (of circumferential segment)
- 14: axis of swivel pin (of circumferential segment)
- 15: rotation axis (of travelling wheel)
- 16: body (of travelling wheel)
- 17: torsional damper
- 2: change-over mechanism
- 21: driving motor
- 22: harmonic gearbox
- 3: change-over mechanism
- 30: travelling wheel
- 31: swivel pin (of circumferential segment)
- 32: swivel pin axis (of circumferential segment)
- 33: driving motor
- 34: worm-gear unit
- 35: worm wheel
- 36: bearing
- 37: body (of travelling wheel)
- 4: change-over mechanism
- 40: travelling wheel
- 41: independent change-over mechanism
- 42: swivel pin (of circumferential segment)
- 43: swivel pin axis (of circumferential segment)
- 44: bearing
- 45: body (of travelling wheel)
- 46: crank
- 47: finger (of crank)
- 48: supporting axle (of travelling wheel)
- 5: transmission means
- 51: rotating cam
- 52: groove (of actuating cam)
- 6: transmission means
- 61: shifting cam
- 62: groove (of shifting cam)
- 7: change-over mechanism
- 70: travelling wheel
- 71: body (of travelling wheel)
- 72: first driving motor (of swinging body)
- 73: harmonic gearbox
- 74: swivel pin (of swinging body)
- 75: swinging body
- 76: second driving motor (of swinging pin)
- 77: swivel pin (of circumferential segment)
- A: basic "wheel gauge" (with segments set in circumferential direction)
- B: increased "wheel gauge"
- S: centre of circumferential segment
- X: eccentricity of rotation axis of circumferential segment with respect to axis of wheel rotation

## Claims

1. Travelling vehicle wheel (10, 30, 40, 70) for driving on a road and/or in a terrain, whose rolling surface is formed of circumferential segments (1), following one after another, whereas the circumferential segments (1) in the body (16, 37, 45, 71) of travelling wheel (10, 30, 40, 70) are arranged displaceably between the position for riding on a road and the terrain position, in which the individual circumferential segments (1) are turned into the askew positions with respect to the circumference of the travelling wheel (10, 30, 40, 70), whereas between the circumferential segments (1) in direction of circumference of the travelling wheel (10, 30, 40, 70) there are gaps interrupting the rolling surface of the travelling wheel (10, 30, 40, 70), whereas each circumferential segment (1) is hinge-connected with body of travelling wheel by means of the change-over mechanism (2, 3, 4, 7) arranged in the body (16, 37, 45, 71) of travelling wheel (10, 30, 40, 70), whereas the input member of hinged connection is coupled with a change-over drive of the circumferential segment (1), and the output member of hinged connection is formed of a swivel pin (13, 31, 42, 77) being firmly connected with the circumferential segment (1), **characterised in that**, between the input and output member of hinged connection there is arranged a swinging body (75), whose one end is in a fixed manner connected with the input member of hinged connection, while its second end is provided with rotation drive of the swivel pin (77) being in a fixed manner connected with the circumferential segment (1).

2. Travelling vehicle wheel according to the claim 1, **characterised in that**, each circumferential segment (1) is coupled with an independent change-over drive.

3. Travelling vehicle wheel according to the claim 1 or 2, **characterised in that**, all circumferential segments (1) are coupled with a common change-over drive.

4. Travelling vehicle wheel according to the claim 3, **characterised in that**, the output of the common change-over drive is formed of the rotating cam (51) of the transmission means (5) arranged in axis (15) of rotation of the travelling wheel (40), whereas its functional shaped surface or surfaces are coupled with swivel pins (42) of all circumferential segments (1).

5. Travelling vehicle wheel according to the claim 3, **characterised in that**, the output of the common change-over drive is formed of a shifting cam (61) of the transmission means (6) arranged in axis (15) of rotation of the travelling wheel (40), whereas its functional shaped surface or surfaces are coupled with the swivel pins (42) of all circumferential segments (1).

6. Travelling vehicle wheel according to any of the claims 1 to 5, **characterised in that**, the change-over drive comprises a hydraulic motor.

7. Travelling vehicle wheel according to any of the claims 1 to 5, **characterised in that**, the change-over drive comprises an electric motor.

8. Travelling vehicle wheel according to the claim 7, **characterised in that**, the change-over drive comprises a harmonic gearbox (22, 73).

9. Travelling vehicle wheel according to the claim 7, **characterised in that**, the change-over drive comprises a worm gear unit (35).

10. Travelling vehicle wheel according to any of the claims 6 to 9, **characterised in that**, the change-over drive comprises an encoder for scanning the position of change-over of the circumferential segment (1).

## Patentansprüche

1. Laufrad (10, 30, 40, 70) des Fahrzeuges zur Fahrt auf einer Fahrbahn und/oder im Terrain, dessen Lauffläche aneinander anschließende Umfangsegmente aufweist, die in dem Körper (16, 37, 45, 71) des Laufrades (10, 30, 40, 70) zwischen der Lage zur Fahrt auf der Fahrbahn und der Terrainlage verstellbar angeordnet sind, in der einzelne Umfangsegmente (1) von der Umfangsrichtung des Laufrades (10, 30, 40, 70) abgelenkt sind, wobei zwischen den Umfangsegmenten (1) in der Umfangsrichtung des Laufrades (10, 30, 40, 70) die Lücken entstanden sind, die die Lauffläche des Laufrades (10, 30, 40, 70) unterbrechen, wobei jedes Umfangsegment (1) mittels einer Verstelleinrichtung (2, 3, 4, 7), die in dem Körper (16, 37, 45, 71) des Laufrades (10, 30, 40, 70) angeordnet ist, mit dem Körper des Laufrades gelenkig verbunden ist, wobei das Eingangsglied der Gelenkverbindung mit einem Verstellantrieb des Umfangsegments (1) verkoppelt ist und das Ausgangsglied der Gelenkverbindung durch einen Drehzapfen (13, 31, 42, 77) gebildet ist, der mit dem Umfangsegment (1) fest verbunden ist, **dadurch gekennzeichnet, dass** zwischen dem Eingangs- und Ausgangsglied der Gelenkverbindung ein schwenkbarer Körper (75) angeordnet ist, dessen ein Ende mit dem Eingangsglied der Gelenkverbindung fest verbunden ist, wobei sein anderes Ende einen Drehantrieb des Drehzapfens (77) aufweist, der mit dem Umfangsegment (1) fest verbunden ist.

2. Laufrad nach dem Anspruch 1 oder 2, **dadurch gekennzeichnet, dass** jedes Umfangsegment (1) mit einem selbstständigen Verstellantrieb verkoppelt ist.

3. Laufrad nach dem Anspruch 1, **dadurch gekennzeichnet, dass** alle Umfangsegmente (1) mit einem gemeinsamen Verstellantrieb verkoppelt sind.

4. Laufrad nach dem Anspruch 3, **dadurch gekennzeichnet, dass** der Ausgang des gemeinsamen Verstellantriebs ein drehbarer Nocken (51) des Getriebemittels (5) ist, der in der Drehachse (15) des Laufrades (40) angeordnet ist, wobei seine Funktionsformfläche oder -flächen mit den Drehzapfen (42) von allen Umfangsegmenten (1) verkoppelt sind.

5. Laufrad nach dem Anspruch 3, **dadurch gekennzeichnet, dass** der Ausgang des gemeinsamen Verstellantriebs ein Schubnocken (61) des Getriebemittels (6) ist, der in der Drehachse (15) des Laufrades (40) angeordnet ist, wobei seine Funktionsformfläche oder -flächen mit den Drehzapfen (42) von allen Umfangsegmenten (1) verkoppelt sind.

6. Laufrad nach einem der Ansprüche 1 bis 5, **dadurch gekennzeichnet, dass** der Verstellantrieb einen Hydromotor aufweist.

7. Laufrad nach einem der Ansprüche 1 bis 5, **dadurch gekennzeichnet, dass** der Verstellantrieb einen Elektromotor aufweist.

8. Laufrad nach dem Anspruch 7, **dadurch gekennzeichnet, dass** der Verstellantrieb ein harmonisches Getriebe (22, 73) aufweist.

9. Laufrad nach dem Anspruch 7, **dadurch gekennzeichnet, dass** der Verstellantrieb ein Schneckengetriebe (35) aufweist.

10. Laufrad nach einem der Ansprüche 6 bis 9, **dadurch gekennzeichnet, dass** der Verstellantrieb einen Encoder zur Abtastung der Lage der Verstellung des Umfangsegmentes (1) aufweist.

## Revendications

1. La roue de roulement (10, 30, 40, 70) du véhicule pour la conduite sur la route et/ou dans le terrain, dont la surface de roulement comprend en série reliant les segments circonférentiels qui sont dans le corp (16, 37, 45, 71) de la roue de roulement (10, 30, 40, 70) agencés d'une manière reglable entre la position pour la conduite sur la route et la position pour le terrain, dans laquelle les segments circonférentiels individuels (1) sont déviés à partir de la direction de la circonférence de la roue de roulement (10, 30, 40, 70), tandis que parmi les segments circonférentiels (1) dans la direction circonférentielle de la roue de roulement (10, 30, 40, 70) il y a les fantes interrompantes la surface de roulement de la roue de roulement (10, 30, 40, 70), tandis que chaque segment circonférentiel (1) par l'intermédiaire du dispositif de réglage (2, 3, 4, 7) qui est agencé dans le corp (16, 37, 45, 71) de la roue de roulement (10, 30, 40, 70) est relié de façon articulée au corps de la roue de roulement tandis que l'élément d'entrée de l'articulation est couplé à un entraînement de réglage du segment circonférentiel (1) et l'élément de sortie de l'articulation est formé par un tourillon (13, 31, 42, 77) qui est relié de manière rigide avec le segment circonférentiel (1) **caractérisé en ce que** entre l'élément d'entrée de l'articulation et celui de sortie est disposé le corps pivotant (75) dont une extrémité est reliée rigidement à l'élément d'entrée de l'articulation tandis que l'autre extrémité est équipée d'un pivot d'actionneur rotatif (77) qui est rigidement associé avec le segment circonférentiel (1).

2. La roue de roulement selon la revendication 1 ou 2, **caractérisé en ce que** chaque segment circonférentiel (1) est couplé avec un entraînement de réglage indépendant.

3. La roue de roulement selon la revendication 1, **caractérisé en ce que** tous les segments circonférentiels (1) sont couplés avec un mécanisme de réglage commun.

4. La roue de roulement selon la revendication 3, **caractérisé en ce que** la sortie du mécanisme de réglage commun est une came rotative (51), des moyens de transmission (5) disposée dans l'axe (15) de la rotation de la roue de roulement (40), tandis que sa surface de la forme fonctionnelle ou les surfaces sont couplées avec les tourillons (42) de tous les segments circonférentiels (1).

5. La roue de roulement selon la revendication 3, **caractérisé en ce que** la sortie du mécanisme de réglage commun est la came coulissante (61) des moyens de transmission (6) disposée dans l'axe (15) de rotation de la roue de roulement (40), tandis que sa surface de forme fonctionnelle ou les surfaces sont couplées avec les tourillons (42) de tous les segments circonférentiels (1).

6. La roue de roulement selon l'une quelconque des revendications 1 à 5, **caractérisé en ce que** l'entraînement de réglage comprend un moteur hydraulique.

7. La roue de roulement selon l'une quelconque des revendications 1 à 5, **caractérisé en ce que** l'entraînement de réglage comprend un moteur électrique.

8. La roue de roulement selon la revendication 7, **caractérisé en ce que** l'entraînement de réglage comprend une transmission harmonique (22, 73).

9. La roue de roulement selon la revendication 7, **caractérisé en ce que** l'entraînemen de réglage comprend un méchanisme de transmission à vis sans fin (35).

10. La roue de roulement selon l'une quelconque des revendications 6-9, **caractérisé en ce que** l'entraînement de réglage comprend un codeur pour détecter la position de déplacement du segment circonférentiel (1).
